# EUROPEAN PATENT APPLICATION

(11) **EP 2 392 687 A1**
(43) Date of publication of application: **07.12.2011**
(21) Application number: 11168681.2
(22) Date of filing: 03.06.2011
(51) Int. Cl.: C23C 10/18, C23C 10/20, F01D 5/28

(54) **Method for manufacturing an oxidation resistant component with improved high temperature strength and corresponding oxidation resistant component with improved high temperature strength**

(30) Priority: 03.06.2010 US 793391
(71) Applicant: General Electric Company, Schenectady, NY 12345 (US)
(72) Inventor: Goller, George Albert, Greenville, SC South Carolina 29615 (US); Cavanaugh, Dennis William, Greenville, SC South Carolina 29615 (US)
(74) Representative: Szary, Anne Catherine

(57) **Abstract**

An oxidation resistant component with high temperature strength and a method of creating such component are disclosed. A modified base metal may be formed by adding at least two strengthening additives to a base metal (20), the base metal being substantially free from both nickel and cobalt and comprising from about 1% to about 27% chromium by weight. The modified base metal may then be formed into a component (22) and an aluminum-containing slurry may be applied to a surface of the component (24). The component may then be heated to diffuse aluminum into the component (26) and to form an aluminum diffusion surface layer (10) therein.

## Description

### FIELD OF THE INVENTION

The present subject matter relates generally to high temperature components and particularly to an oxidation resistant component with improved high temperature strength and a method of creating such component.

### BACKGROUND OF THE INVENTION

The operating environment within a gas turbine engine is both thermally and chemically hostile. For example, operating temperatures within a turbine engine may range from about 1200° F to about 2200°F (about 650° C to about 1200° C), depending on the type of gas turbine being used. Such high temperatures combined with the oxidizing environment of a gas turbine generally necessitate the use of turbine components made from nickel- or cobalt-containing alloys having sufficient high temperature strength and oxidation resistance to thereby enjoy an acceptable operating life within the turbine. Thus, turbine components are typically formed from nickel alloy steels, nickel-based or cobalt-based superalloys, or other specialty alloys.

To alter the high temperature properties of specialty alloys, strengthening mechanisms are generally known that improve the strength of such alloys (e.g. the yield strength and the ultimate tensile strength) by reducing the movement of dislocations in the crystalline lattice of the base metal during high temperature exposure. For example, solid solution strengthening may be used to improve the strength of a superalloy by adding atoms of one element, such as tungsten, to the crystalline lattice of the base metal. In particular, the atoms may diffuse into the matrix of the base metal forming a solid solution that increases the strength of the base metal. Alternatively, precipitation strengthening may be used to increase the strength of a superalloy by producing fine particles within the base metal that impede the movement of the dislocations within the crystalline lattice.

Additionally, significant advances in the high temperature capabilities of such specialty alloys have been achieved through the use of oxidation resistant environmental coatings capable of protecting the alloys from oxidation, hot corrosion, etc. For example, aluminum-containing coatings, particularly aluminide coatings, have been used as environmental coatings on nickel- and cobalt-based superalloy gas turbine engine components. During high temperature exposure in air, the aluminide coating forms a protective aluminum oxide (alumina) scale that inhibits oxidation of the coating and the underlying substrate.

Diffusion coatings on superalloy substrates are typically characterized as having an outer coating or additive layer that primarily overlies the original surface of the coated substrate and a diffusion zone created below the original surface. The outer coating of the diffusion coating primarily contains the intermetallic phase MA1, wherein M is typically nickel or cobalt. For example, in a nickel-based superalloy, the outer coating consisting primarily of NiAl which is formed as aluminum on the surface of the metal combines with nickel diffusing outward from the metal substrate. The diffusion zone of the diffusion coating is generally characterized by a hard, brittle intermetallic phase that forms during the coating reaction as a result of gradients and changes in elemental solubility. Thus, in a nickel-based superalloy, the diffusion zone is created due to the inward diffusion of the aluminum and the outward diffusion of nickel, with the concentration of aluminum gradually decreasing with increasing distance from the outer coating and the concentration of nickel gradually increasing with increasing distance from the outer coating.

Aluminide diffusion coatings are typically formed by a diffusion process, such as pack cementation or vapor phase aluminizing (VPA) techniques, or by diffusing aluminum deposited by chemical vapor deposition (CVD) or slurry coating. For example, in a slurry coating diffusion process, an aluminum-containing slurry is prepared and applied to the surface of the superalloy substrate to be coated. The slurry is then heated to a high temperature, such as above 1400° F (about 760° C) and maintained at such temperature for a duration sufficient to permit the aluminum to diffuse within the superalloy. Generally, the processing temperature will determine whether the diffusion coating is characterized as an outward-type or inward-type, with outward-type diffusion occurring at higher processing temperatures (e.g. at or near the solution temperature of the alloy being coated). In the case of a nickel-based superalloy, an outward-type diffusion promotes the outward diffusion of nickel from the base metal into the deposited aluminum layer (e.g. the aluminum-containing slurry coating) to form the outer coating and also reduces the inward diffusion of aluminum from the deposited aluminum layer, resulting in a relative thick outer coating above the original surface of the substrate. Conversely, lower processing temperatures promote the inward diffusion of aluminum from the deposited aluminum layer into the substrate, yielding an inward-type diffusion coating characterized by an outer coating that may extend below the surface of the substrate.

Although it is well understood that aluminum diffused specialty alloys, such as aluminum diffused nickel- or cobalt-based superalloys, provide excellent oxidation resistance as well as sufficient high temperature strength, there is at least one downside to their use as the base metal in high temperature components. In particular, specialty alloys can be very expensive to produce, with material costs alone being significantly higher than lower grade/alloy steels. Moreover, these increased material costs are in addition to the costs typically associated with treating/processing the specialty alloys in order to improve their high temperature strength and/or provide them with any necessary coatings. Thus, from start to finish, the cost of producing a high temperature, specialty alloy component can be quite substantial.

Efforts have been made to replace the use of specialty alloys in high temperature components through the development of oxidation resistant, lower grade/alloy steels. For example, attempts have focused on creating high aluminum alloys through alloy additions in many low cost steels. However, achieving a high aluminum alloy during melting of such lower grade/alloy steels has proved difficult and problematic. Moreover, the high temperature strength of these lower grade/alloy steels is typically less-than-optimal, thereby preventing the widespread use of such steels across all high temperature applications.

Accordingly, a relatively low cost steel that exhibits similar high temperature strength and oxidation resistance to that of aluminide coated specialty alloys, such as nickel-and cobalt-based superalloys, would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, a method is generally disclosed for creating an oxidation resistant component with high temperature strength. The method may include adding at least two strengthening additives to a base metal during melting to form a modified base metal, forming a component from the modified base metal, applying a slurry coating to a surface of the component and heating the component to diffuse aluminum from the slurry coating into the component to form an aluminum diffusion surface layer within the component.

In another aspect, an oxidation resistant component with high temperature strength is generally disclosed. The component may include a modified base metal configured as a component, wherein the modified base metal is formed at least in part by adding at least two strengthening additives to a base metal being substantially free from both nickel and cobalt and comprising from about 1% to about 27% chromium by weight. Additionally, the component includes an aluminum diffusion surface layer extending below a surface of the modified base metal. The aluminum diffusion surface layer is characterized by an intermetallic iron-chromium-aluminum phase having a thickness of greater than about 50 micrometers.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWING

A full and enabling disclosure of the present invention, including the best mode thereof, directed to one of ordinary skill in the art, is set forth in the specification, which makes reference to the appended figures, in which:
FIG. 1 is a graph illustrating the yield strength of a low grade 10Cr alloy steel as compared to the yield strengths of high alloy 304 grade and 310 grade stainless steels;
FIG. 2 is a graph illustrating the ultimate tensile strength of a low grade 10Cr alloy steel as compared to the ultimate tensile strengths of high alloy 304 grade and 310 grade stainless steels;
FIG. 3 is a micrograph showing an aluminum diffusion surface layer within a low grade, forged 10Cr alloy steel;
FIG. 4 is a micrograph showing an aluminum diffusion surface layer within a low grade, cast 410 stainless steel; and
FIG. 5 is a flowchart illustrating one embodiment of a method for creating an oxidation resistant component with high temperature strength in accordance with aspects of the present subject matter.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

The present subject matter is generally directed to an oxidation resistant component with improved high temperature strength and a method of creating such component. In particular, a low cost component is disclosed that is suitable for use in various high temperature, oxidizing environments, such as the environment of a gas turbine. In one embodiment, the component may comprise a turbine component formed from a modified low grade/alloy steel that is significantly less expensive than the specialty alloys, such as nickel- or cobalt-based superalloys, typically used to form turbine components. Additionally, the present subject matter discloses a method for creating an oxidation resistant component with improved high temperature strength. The method generally includes adding at least two strengthening additives to a base metal to form a modified base metal, forming a turbine component from the modified base metal, applying an aluminum-containing slurry to the surface of the turbine component and heating the turbine component to permit the aluminum within the slurry to diffuse into the turbine component.

Generally, the inventors of the present subject matter have discovered that many of the high temperature properties seen in various aluminum diffusion coated specialty alloys, such as high alloy stainless steels (e.g. 304 grade and 310 grade stainless steels) and other specialty alloys (e.g. nickel- and cobalt-based superalloys), may also be exhibited in low grade/alloy steels, such as steels being substantially free from both nickel and cobalt. In particular, it is believed that various low cost steels may be modified with strengthening additives and diffused with aluminum to provide improved high temperature strength and oxidation resistance, thereby permitting turbine components formed from such steels to be capable of withstanding temperatures of up to about 1800° F. Thus, in one embodiment, a mock, high alloy stainless steel may be created from relatively inexpensive materials.

For example, the low grade/alloy steels contemplated within the scope of the present subject matter may be modified to include at least two strengthening additives to provide either solid solution strengthening, precipitation strengthening or both in order to enhance the yield and ultimate tensile strength of the modified base metal. In particular, these strengthening mechanisms may permit many low grade/alloy steels to have acceptable load-bearing strengths at temperatures well above 1000° F, the temperature at which the strength such steels typically begins to decrease significantly.

Moreover, aluminum may be diffused into these low cost, modified base metals to form an aluminum diffusion surface layer that prevents oxidation of the metals during exposure to high temperature oxidants. Specifically, oxidation testing has confirmed that an aluminum diffusion surface layer may be created in low grade/alloy steels that is highly oxidation resistant at elevated temperatures for extended periods of time, as the aluminum within the diffusion layer forms a protective aluminide oxide (alumina) scale that inhibits oxidation of the steel. Thus, for example, an aluminum diffusion surface layer may be formed in a low grade 10Cr alloy steel (i.e. an alloy steel with a chromium content of about 8% to about 11%, by weight). Oxidation testing has indicated that forming such a surface layer within the 10Cr alloy steel enables the steel to withstand an oxidizing environment at temperatures of at least about 1800° F for approximately 5000 hours with no signs of oxidation. Typically, this 10Cr alloy steel would rapidly oxidize at temperatures above approximately 1000° F.

The inventors of the present subject matter have also discovered that, by applying an aluminum diffusion process to a base metal being substantially free from nickel and cobalt, a single aluminum diffusion surface layer may be formed within the base metal (i.e. below the original surface of the base metal). In particular, it has been found that aluminum diffusion of low grade/alloy steels does not result in an outer coating overlying the original surface of the base metal of the steel, but rather a diffused surface layer characterized by a strong intermetallic aluminum-containing phase that is metallurgically part of the base metal. Moreover, its has been found that the aluminum diffusion surface layer created within many low grade/alloy steels is relatively ductile, thereby reducing the likelihood of chipping, scratching and/or cracking at the surface of the steel. Further, this inwardly diffused surface layer may be formed across a wide range of diffusion temperatures (such as from about 1500° F to about 2100° F), resulting in the ability to create surface layers within a base metal of varying uniform thicknesses depending on the particular diffusion temperature utilized. It is also believed that such processing temperatures may also promote precipitation strengthening within a modified base metal, thereby enhancing the high temperature strength of the steel.

Generally, the present subject matter will be described herein with reference to turbine components for use within a gas turbine. However, it should be appreciated that application of the present subject matter need not be limited to gas turbine components, but may be generally applied to any high temperature components. Particularly, the present subject matter may be utilized to form low cost, oxidation resistant components having improved high temperature strength for use in various high temperature industrial applications.

With regard to gas turbine applications, the present subject matter provides that various strengthening additives may be adding during the melting of a low grade/alloy steel to modify its base metal composition and thereby improve the high temperature strength of a turbine component subsequently formed from such modified base metal. The newly formed turbine component may then be subjected to an aluminum diffusion process to create a highly oxidation resistant, aluminum diffusion surface layer within the modified base metal of the turbine component. As such, the high costs generally associated with the use of various specialty alloys to form gas turbine components may be avoided. For example, utilizing the modified, low grade/alloy steels contemplated by the present subject matter, turbine components may be formed that have sufficient load-bearing strength and oxidation resistance at operating temperatures of up to about 1800° F. Thus, it should be appreciated that the present subject matter may be applicable to turbine components used in the various sections of a gas turbine (e.g. the compressor and turbine sections thereof), depending primarily on the operating temperatures of the gas turbine being utilized. For instance, in various embodiments, the modified, low cost steels disclosed herein may be used to form turbine components that may include, but are not limited to, turbine shrouds, compressor vanes and blades, as well as many turbine buckets and nozzles.

As indicated above, the base metal being modified by the addition of strengthening additives in order to improve the high temperature properties of the metal may include various low grade/alloy steel compositions. In particular, the base metal may generally comprise any base steel composition being substantially free from both nickel and cobalt and including a chromium content, by weight, of from about 1% to about 27%. For example, in several embodiments, the base metal may include, but is not limited to: a ferritic stainless steel having a chromium content, by weight, ranging from about 11% to about 27%; a martensitic stainless steel having a chromium content, by weight, ranging from about 11% to about 18%; a 10Cr alloy steel having a chromium content, by weight, ranging from about 8% to about 11%; or a low chrome alloy steel having a chromium content, by weight, ranging from about 1% to about 8%. It should be appreciated that, by substantially free from both nickel and cobalt, it is meant that the base metal generally includes an insignificant amount of nickel or cobalt, such as less than about 0.75%, by weight, of either nickel or cobalt.

According to several embodiments of the present subject matter, during the melting of a base metal, various strengthening additives may be added to the base metal in order to form a modified base metal with improved high temperature properties. As used herein, the term "strengthening additive" generally means any element, other than nickel or cobalt, that is added to a base steel composition in order to improve the strength of the resulting steel by reducing the movement of dislocations within the crystalline lattice of the steel. Thus, suitable strengthening additives may include elements known to provide solid solution strengthening by adding atoms of the strengthening additive to the crystalline lattice of the base metal. Such strengthening additives may include, but are not limited to, nitrogen, carbon, copper, tungsten, molybdenum and mixtures thereof. Similarly, suitable strengthening additives may also include elements known to provide precipitation strengthening in steels by producing fine particles (e.g. nano-sized particles) within the base metal that impede the movement of dislocations within the steel's crystalline lattice. Such strengthening additives may include, but are not limited to, niobium, nitrogen, boron, copper, manganese, vanadium, carbon, yttrium, aluminum, titanium and mixtures thereof. It should be appreciated that, in some embodiments, a base metal, such as those described above, may include an initial concentration of one or more of the same elements being added as strengthening additives. In such case, the strengthening additive constitutes the amount of such element(s) added in addition to the initial concentration.

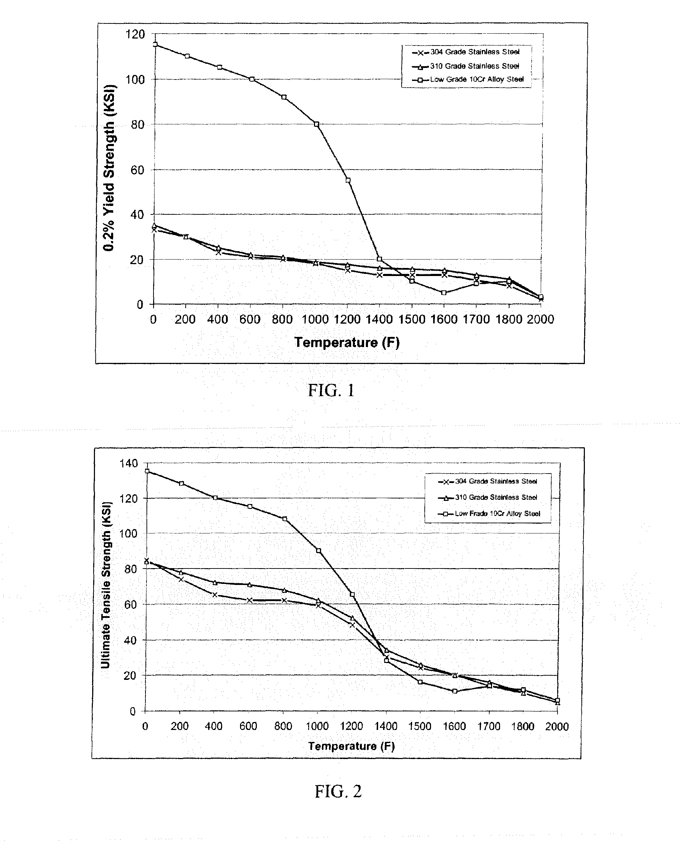

By adding combinations of the above described strengthening additives to a low cost, low grade/alloy steel, the high temperature strengths of such steels can be improved at temperatures above 1000° F. FIGS. 1 and 2 graph the yield and ultimate tensile strength of a typical, low grade 10Cr alloy steel (i.e. having chromium content of about 8% to about 11%, by weight) against the strengths of two high alloy stainless steels, particularly 304 grade and 310 grade stainless steels. As shown, the yield and ultimate tensile strengths of the 10Cr alloy are generally much higher than those of the high alloy stainless steels at temperatures below about 1000° F. However, the strength of the 10Cr alloy begins to decrease significantly at temperatures above 1000° F. Of particular relevance, at temperatures within a range from about 1400° F to about 1700° F, the yield and ultimate tensile strength of the 10Cr alloy drop below those of the high alloy stainless steels. Similar strength curves are common in various known low grade/alloy steels, with strengths dropping below those of high alloy stainless steels within specified high temperature ranges. However, with the addition of strengthening additives to produce solid solution strengthening and/or precipitation strengthening within the steel, it is believed that the yield and ultimate tensile strengths of a low grade/alloy steel, such as a 10Cr alloy steel, may be maintained at or above the strengths of many high alloy stainless steels or other specialty alloys with increasing temperatures up to about 1800° F.

Generally, in order to promote solid solution strengthening and/or precipitate strengthening within a base metal, a combination of at least two strengthening additives must be added to modify the base metal. As an example, in a base metal having a composition generally including chromium, carbon and the balance iron, various combinations of strengthening additives may be included to modify the high temperature properties of the base metal. In one embodiment, a combination of carbon, molybdenum, vanadium, nitrogen, niobium and boron may be added to the base metal. In another embodiment, a combination of carbon, niobium, vanadium, nitrogen, boron and titanium may be used to modify the base metal. Additionally, in a further embodiment, a combination of manganese, tungsten, molybdenum, nitrogen and boron may be used. Moreover, in yet another embodiment, a combination of carbon, manganese, copper, tungsten, nitrogen, titanium, and aluminum may be melted into the base metal. It should be appreciated, however, that the particular combination of strengthening additives used to modify a base metal may generally vary depending on the specific composition of the base metal, such as the amount of carbon present in the base metal, and the desired high temperature properties of the modified base metal.

Further, it should be appreciated that the specific concentration of a particular strengthening additive used to modify a base metal will also vary depending on the composition of the base metal, the desired high temperature properties of the modified base metal, and the identity and amount of any other strengthening additives being used in combination with the particular strengthening additive. Generally, however, the total concentration within a modified base metal of a particular element having strengthening characteristics (including both the initial concentration of the element within the base metal and amounts added as a strengthening additive) may range, by weight, as provided: carbon from about 0.15% to about 0.3%; niobium up to 2% (e.g., a positive amount up to 2%), nitrogen from about 0.01% to about 0.4%, boron from about .05% to about 0.15%, copper up to 2% (e.g., a positive amount up to 2%), tungsten up to 4% (e.g., a positive amount up to 4%), manganese up to 4% (e.g., a positive amount up to 4%), molybdenum up to 3% (e.g., a positive amount up to 3%), vanadium up to 1% (e.g., a positive amount up to 1%), yttrium up to 0.2% (e.g., a positive amount up to 0.2%), aluminum up to 3% (e.g., a positive amount up to 3%) and titanium up to 0.1% (e.g., a positive amount up to 0.1%).

After modifying the base metal to include at least two strengthening additives, the modified base metal may then be formed into a high temperature component, such as a turbine component. Generally, the modified base metal may be formed into a component by any method or means generally known in the art. Thus, in one embodiment, the modified base metal may be used in a casting process to form a cast turbine component. In another embodiment, the modified base metal may be worked to form a wrought turbine component.

Depending on the composition of the modified base metal and particularly on the identity and amount of the strengthening additives used, it is believed that sufficient strengthening of the modified base metal, due to solid solution strengthening and/or precipitation strengthening, may occur during the formation of the component. For example, carbide precipitates may generally form during melting and therefore may provide precipitate strengthening within a turbine component formed by a casting process or any other suitable process. Additionally, the hot working and annealing of a wrought turbine component may further promote the growth and positioning of fine precipitates within the modified base metal of the component. It is also believed that the high processing temperatures of the aluminum diffusion process, described below, may also promote the growth of precipitates within the modified base metal, thereby providing further strengthening. However, in other embodiments, secondary heat treatments may be performed to enable sufficient high temperature properties to be achieved. Thus, in one embodiment, the formed component may be subjected to various known age hardening treatments or other suitable heat treatments, such as annealing, to provide improved high temperature strength.

In accordance with various embodiments of the present subject matter, the component created from the modified base metal may also be subjected to an aluminum diffusion process to provide high oxidation resistance to the component. In particular, an aluminum diffusion surface layer may be formed within the modified base metal of the component by a slurry coating diffusion process in which aluminum is deposited and diffused into the surface of the component. The slurry coating process makes use of an aluminum-containing slurry, the composition of which includes a donor material containing a metallic aluminum, a halide activator, and a binder. Notably missing from the ingredients of the slurry composition are inert fillers, such as inert oxide materials (e.g. aluminum oxide) whose particles are prone to sintering during the diffusion process. Additionally, although the present subject matter generally describes a slurry coating diffusion process, it is foreseeable that the aluminum diffusion surface layer may be formed within a substantially nickel- and cobalt-free turbine component by various other known diffusion processes, such as pack cementation, VPA and CVD processes.

Suitable donor materials for the slurry coating composition may generally include aluminum alloys with higher melting temperatures than aluminum, which has a melting point of approximately 1220° F (660° C). For example, donor materials may include, but are not limited to, metallic aluminum alloyed with chromium, cobalt and/or iron. Other suitable alloying agents having a sufficiently high melting point so as to not deposit during the diffusion process, but instead serve as an inert carrier for the aluminum of the donor material, should be apparent to those of ordinary skill in the art. In a preferred embodiment, the donor material comprises a chromium-aluminum alloy. Particularly, it has been found that the alloy 56Cr-44Al (44%, by weight, aluminum, with the balance chromium and incidental impurities) is well-suited for diffusion processes performed over the wide range of diffusion temperatures contemplated by the present subject matter.

In one embodiment, the donor material may be in the form of a fine powder to reduce the likelihood that the donor material becomes lodged or entrapped in crevices, internal passages or the like of the turbine component. For example, in particular embodiments, the particle size for the donor material may be -200 mesh (a maximum diameter of not larger than 74 micrometers) or finer. However, it should be appreciated that powders with a larger mesh size may be used within the scope of the present subject matter. For instance, it is foreseeable that powders with a mesh size of 100 mesh (a maximum diameter of up to 149 micrometers) or larger may be used.

Various halide activators may be used within the slurry coating composition. Particularly suitable halide activators may include ammonium halides, such as ammonium chloride (NH₄Cl), ammonium fluoride (NH₄F), ammonium bromide (NH₄Br) and mixtures thereof. It should be appreciated, however, that other halide activators may be used within the scope of the present subject matter. Generally, suitable halide activators are capable of reacting with the aluminum contained in the donor material to form a volatile aluminum halide (e.g. AlCl₃, AlF₃) that reacts at the surface of the turbine component and is diffused into the component to from an intermetallic iron-chromium-aluminum phase. Additionally, for use in the slurry, the halide activator may be in the form of a fine powder. Further, in some embodiments, the halide activator powder may be encapsulated to inhibit the absorption of moisture, such as when a water-based binder is utilized.

Suitable binders contained in the slurry coating composition may generally include an organic polymer. For example, in one embodiment, the binder may include various alcohol-based organic polymers, water-based organic polymers or mixtures thereof. As such, the binder may be capable of being burned off entirely and cleanly at temperatures below that required to vaporize and react the halide activator, with the remaining residue being essentially in the form of an ash that can be easily removed, for example, by forcing a gas, such as air, over the surface of the component following the diffusion process. Commercial examples of suitable water-based organic polymeric binders include a polymeric gel available under the name BRAZ-BINDER GEL from the VITTA CORPORATION (Bethel, CT). Suitable alcohol-based binders can be low molecular weight polyalcohols (polyols), such as polyvinyl alcohol (PVA). Additionally, in one embodiment, the binder may also incorporate a cure catalyst or accelerant such as sodium hypophosphite. It should be appreciated that various other alcohol- or water-based binders may be used within the scope of the present subject matter. Moreover, it is foreseeable that inorganic polymeric binders may also be suitable for use within the scope of the present subject matter.

Suitable slurry compositions generally have a solids loading (donor material and activator) of about 10% to about 80%, by weight, with the balance binder. More particularly, suitable slurry compositions may contain, by weight, donor material powder in the range of about 35% to about 65%, such as from about 45% to about 60% and all other subranges therebetween, binder in the range of about 25% to about 60%, such as from about 25% to about 50% and all other subranges therebetween, and halide activator in the range from about 1% to about 25%, such as from about 5% to about 25% and all other subranges therebetween. In a specific embodiment, the slurry composition may comprise, by weight, donor material powder of about 50%, halide activator of about 10%, with the balance binder. It should be appreciated that, within the above described ranges, the slurry composition may have a consistency that allows its application to a turbine component by a variety of methods, including spraying, dipping, brushing, injection, etc.

It has been found that the slurry compositions of the present subject matter can be applied to have a non-uniform green state thickness (i.e. an un-dried thickness) and still produce an aluminum diffusion surface layer of very uniform thickness. Additionally, when subjecting a cast turbine component to the aluminum diffusion process, it has been found that the slurry composition may be applied directly to the as-cast surface of the component. Thus, prior machining of the cast surface is not required to form a protective aluminum diffusion surface layer within a cast component. Further, it has also been found that the disclosed slurry compositions may be capable of producing an inwardly diffused, aluminum-rich surface layer over a broad range of diffusion temperatures, generally in a range of about 1500° F to about 2100° F (about 815° C to about 1150° C), such as from about 1800° F to about 2000° F (about 980° C to about 1090° C) and all other subranges therebetween.

After applying the slurry to the surface of a formed turbine component, such as a wrought or cast turbine component, the component may then be placed in a coating chamber or retort to perform the diffusion process. Additional slurry coatings or activator materials are not required to be present in the retort. The retort may then be evacuated and backfilled with an inert or reducing atmosphere (such as with argon or hydrogen) until a -40° F dew point is achieved. The temperature within the retort may then be raised to a temperature sufficient to burn off the binder, for example from about 300° F to about 400° F (about 150° C to about 200° C), with further heating being performed to attain the desired diffusion temperature described above, about 1500° F to about 2100° F, during which time the halide activator is volatilized, an aluminum halide is formed and aluminum is deposited on the surface of the component. The component is then held as such diffusion temperature for a duration of about 2 hours to about 12 hours, such as about 2 hours to about 4 hours, to allow the aluminum to diffuse into the surface of the component.

Following the diffusion process, the component may be removed from the retort chamber and cleaned of any residues remaining in and/or on the component. It has been found that such residues are essentially limited to an ash-like residue of the binder and residue of donor material particles, the latter of which being primarily the metallic constituent (or constituents) of the donor material other than aluminum. These residues may be readily removed, such as with forced gas flow, without resorting to more aggressive removal techniques, such as wire brushing, glass bead or oxide grit burnishing, high pressure water jet, or other such methods that entail physical contact with a solid or liquid to remove firmly attached residues.

The thickness of the aluminum diffusion surface layer within the turbine component may vary depending primarily on the diffusion temperature, as well as the duration of the diffusion treatment. However, generally, thicknesses may range, as measured from the surface of the turbine component to the location within the modified base metal at which the aluminum concentration is 0%, from about 25 micrometers to about 400 micrometers, such as about 100 micrometers to about 400 micrometers or, about 225 micrometers to about 350 micrometers, and all other subranges therebetween. Without wishing to be bound by any particular theory, it is believed that such relatively deep surface layers, particularly thicknesses greater than about 200 micrometers, may be achieved due to the particular aluminum diffusion process utilized as well as the absence of nickel and cobalt within the base metal.

Additionally, the aluminum content of the aluminum diffusion surface layer may also vary depending on, but not limited to, the diffusion temperature and the duration of the treatment. Generally, it has been found that the aluminum content at the surface of the turbine component may range from about 10% to about 14%, by weight, such as from about 12% to about 14% and all other subranges therebetween, with the aluminum content reducing to 0% at the interface between the aluminum diffusion surface layer and the non-diffused, modified base metal. Thus, the surface layer may be a graded layer having a diminishing aluminum concentration from the surface of the component into its thickness. Moreover, it is foreseeable that the aluminum content at the surface of the turbine component may be greater than 14%, by weight, given differing diffusion temperatures and durations as well as differing percentages of aluminum content within the slurry composition.

Moreover, it has also been found that the aluminum diffusion surface layer formed in the modified low grade/alloy steels is relatively ductile and malleable. Generally, the hardness of the surface layer may be within the Rockwell B scale. In particular, hardness values of the surface layer may range in the mid to upper Rockwell B scale, such as from about 70 HRB to about 95 HRB or from about 75 HRB to about 90 HRB and all other subranges therebetween. As such, turbine components formed from the modified base metals contemplated by the present subject matter and subjected to the described slurry coating diffusion process may be less likely to be chipped, scratched or cracked during installation or operation. It should be noted that all hardness values referenced herein were taken using a Knoop hardness test and converted to the Rockwell B scale. Specifically, a pyramidal diamond was pressed into a cross-sectioned surface of the material of interest and the resulting indentation was measured using a microscope.

Additionally, it has been found that the hardness of the aluminum diffusion surface layer, as well as other mechanical and oxidation resistant characteristics of the surface layer, remains unaffected by the heat treatment of the non-diffused, modified base metal. Thus, it should be appreciated that, after the aluminum diffusion process, the modified base metal of a component may be heat treated to obtain any desired mechanical properties. As indicated above, it may be desirable, in one embodiment, to perform secondary heat treatments on the modified base metal to improve its high temperature strength by promoting further solid solution strengthening and/or precipitation strengthening. For example, a turbine component may be annealed or quenched and tempered without altering the properties of the aluminum diffusion surface layer. Further, it should be appreciated that, if desirable, the component may also be subjected to a pre-oxidation treatment, such as by exposing the component to an oxidant in a controlled atmosphere to form a protective alumina scale on its surface.

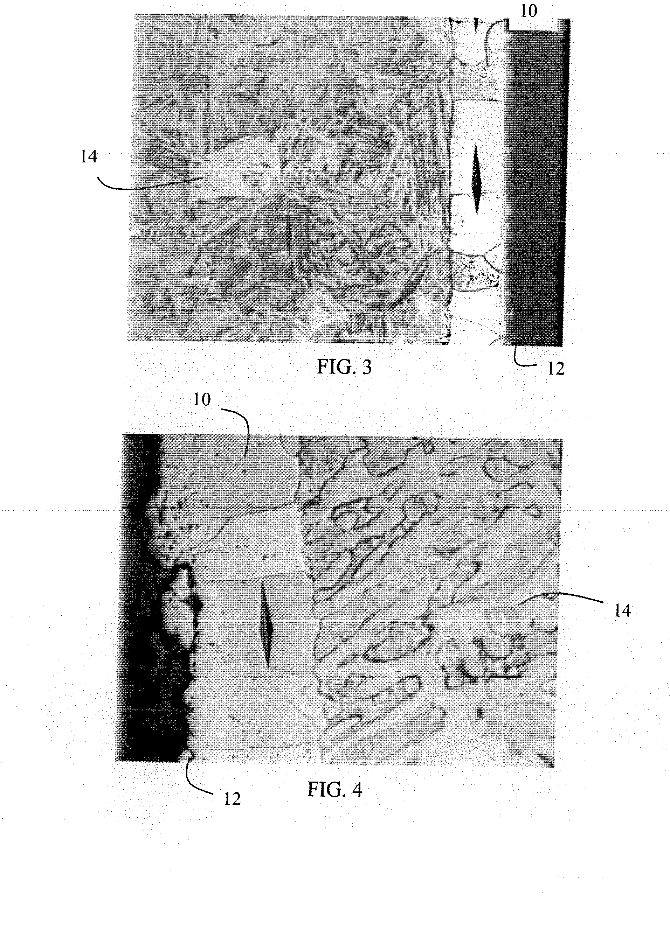

FIGS. 3 and 4 are micrographs of two low grade/alloy steels after being subjected to the aluminum diffusion process described above. In particular, FIG. 3 is a micrograph of a forged, low grade 10Cr alloy steel having a chromium content, by weight, of about 9%. As can be seen, an aluminum diffusion surface layer 10 was formed in the 10Cr alloy between the original surface 12 of the steel and the non-diffused base metal 14. It was found that the surface layer 10 generally comprised an intermetallic iron-chromium-aluminum phase, with the aluminum content, by weight, being about 14% at the original surface 12 and reducing to 0% at the interface of the surface layer 10 and the non-diffused base metal 14. Additionally, the thickness of the surface layer 10 was measured at approximately 305 micrometers (0.012 inches). Similarly, FIG. 4 is a micrograph of a cast, low grade 410 stainless steel having a chromium content, by weight, of about 12%. Similar to that seen in FIG. 3, an aluminum diffusion surface layer 10 was formed between the original surface 12 of the steel and the non-diffused base metal 14. The surface layer 10 was characterized by an intermetallic iron-chromium-aluminum phase. Additionally, the thickness of surface layer 10 was measured at approximately 200 micrometers (0.008 inches). It should be noted that both of the steels depicted in FIGS. 3 and 4 were coated with a slurry composition containing 50% chromium aluminum (56Cr-44Al), 10% ammonium chloride, with the balance being VITTA BRAZ-BINDER GEL, and were heated within a retort to a diffusion temperature of 2000° F for a duration of 4 hours.

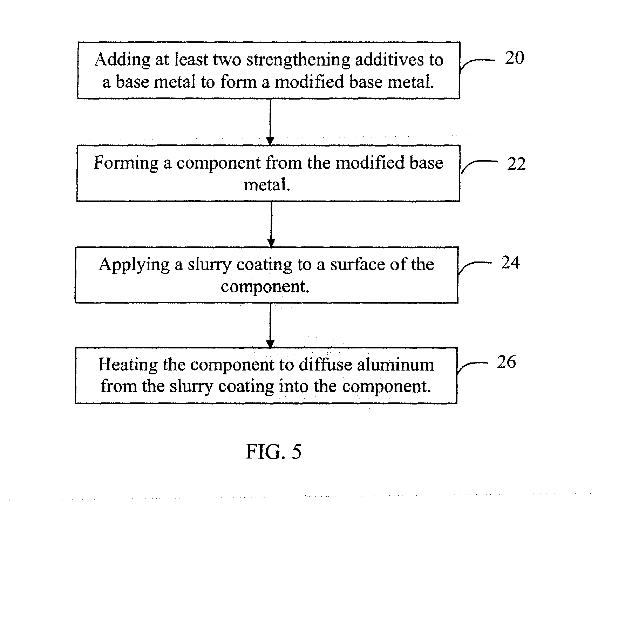

Referring now to FIG. 5, a flowchart is provided illustrating one embodiment of a method for creating an oxidation resistant component with high temperature strength. In 20, at least two strengthening additives are added to a base metal to form a modified base metal. Additionally, a component is formed from the modified base metal in 22. Moreover, in 24, a slurry coating is applied to a surface of the component. Further, as depicted in 26, the component is heated to diffuse aluminum from the slurry coating into the component.

Accordingly, the present subject matter generally provides for the creation of oxidation resistant turbine components that may be produced using modified low grade/alloy steels having improved high temperature strength. As such, high temperature turbine components may be created at a fraction of the cost generally associated with the use of specialty alloys.

## Claims

1. A method for creating an oxidation resistant component with high temperature strength, the method comprising:
adding at least two strengthening additives to a base metal (14) during melting to form a modified base metal (20), the base metal (14) being substantially free from both nickel and cobalt and comprising from about 1% to about 27% chromium by weight;
forming a component from the modified base metal (22);
applying a slurry coating to a surface of the component (24), said slurry coating comprising a metallic aluminum alloy, a halogen activator, and a binder; and
heating the component to diffuse aluminum from the slurry coating into the component (26) to form an aluminum diffusion surface layer (10) within the component.

2. The method of claim 1, wherein a strengthening additive of the at least two strengthening additives comprises carbon, niobium, nitrogen, boron, copper, tungsten, manganese, molybdenum, vanadium, yttrium, aluminum or titanium.

3. The method of claim 1, wherein the at least two strengthening additives comprise a combination of carbon, molybdenum, vanadium, nitrogen, niobium and boron.

4. The method of claim 1, wherein the at least two strengthening additives comprise a combination of carbon, niobium, vanadium, nitrogen, boron and titanium.

5. The method of claim 1, wherein the at least two strengthening additives comprise a combination of carbon, manganese, tungsten, molybdenum, nitrogen and boron.

6. The method of any preceding claim, wherein at least one of forming the component or heating the component produces at least one of solid solution strengthening or precipitation strengthening within the modified base metal.

7. The method of any preceding claim, wherein the aluminum diffusion surface layer (10) has a thickness of about 25 micrometers to about 400 micrometers.

8. The method of any preceding claim, wherein the base metal (14) comprises between about 8% to about 12% chromium by weight.

9. An oxidation resistant component with high temperature strength, the component comprising:
a modified base metal configured as a component, said modified base metal being formed at least in part by adding at least two strengthening additives to a base metal (14), said base metal (14) being substantially free from both nickel and cobalt and comprising from about 1% to about 27% chromium by weight; and
an aluminum diffusion surface layer (10) extending below a surface of said modified base metal, said aluminum diffusion surface layer (10) **characterized by** an intermetallic iron-chromium-aluminum phase having a thickness of greater than about 50 micrometers.

10. The component of claim 9, wherein a strengthening additive of said at least two strengthening additives comprises carbon, niobium, nitrogen, boron, copper, tungsten, manganese, molybdenum, vanadium, yttrium, aluminum or titanium.

11. The component of claim 9, wherein said at least two strengthening additives comprise a combination of carbon, molybdenum, vanadium, nitrogen, niobium and boron.

12. The component of claim 9, wherein said at least two strengthening additives comprise a combination of carbon, niobium, vanadium, nitrogen, boron and titanium.

13. The component of claim 9, wherein said at least two strengthening additives comprise a combination of carbon, manganese, tungsten, molybdenum, nitrogen and boron.

14. The component of any one of claims 9 to 13, wherein said aluminum diffusion surface layer (10) has a thickness of about 50 micrometers to about 400 micrometers.

15. The component of any one of claims 9 to 14, wherein said base metal (14) comprises between about 8% to about 12% chromium by weight.
